# EUROPÄISCHE PATENTSCHRIFT

(11) **EP 1 366 895 B1**
(45) Veröffentlichungstag und Bekanntmachung des Hinweises auf die Patenterteilung: **14.09.2005**
(21) Anmeldenummer: 03450131.2
(22) Anmeldetag: 26.05.2003
(51) Int. Cl.: B32B 15/01, B23K 20/00

(54) **Composite-Flachstab**
Composite flat element
Element plat composite

(30) Priorität: 31.05.2002 AT 8362002
(43) Veröffentlichungstag der Anmeldung: 03.12.2003
(73) Patentinhaber: Böhler Miller Messer und Sägen GmbH, 3333 Böhlerwerk (AT)
(72) Erfinder: Gstettner, Manfred, 3333 Böhlerwerk (AT)
(74) Vertreter: Wildhack, Helmut

(56) Entgegenhaltungen:
- EP-A- 0 406 688
- DE-B- 1 170 216
- GB-A- 1 139 102
- US-A- 5 472 796

## Beschreibung

Die Erfindung betrifft einen Composite-Flachstab, gebildet aus miteinander metallisch verbundenen zähfesten und verschleißfest-harten Teilen für mechanisch hoch- und auf Verschleiß, sowie auf Pressung beanspruchte Maschinen- oder Anlagen-Komponenten, wie Maschinenmesser, insbesondere Maschinenwendemesser und dergleichen.

Verschleißfeste Bauteile oder Messer können bei deren Verwendung, sowohl auf Abrieb sowie Pressung als auch mechanisch hochbelastet sein. Daraus ergibt sich in vorteilhafter Weise eine Anwendung oder ein Einsatz eines Teiles mit Composite-Aufbau, wobei im oberflächennahen Arbeitsteil mit hoher Härte und Abriebfestigkeit, jedoch mit geringer Zähigkeit auf einem zähfesten Grundteil, welcher überwiegend den Biegebeanspruchungen standhalten soll, aufgebracht ist.

Composite-Werkstoff-Teile der oben beschriebenen Art sind bekannt und können durch Aufbringen des Arbeitsteiles auf einem Trägerteil mittels Schmelzschweißung, zum Beispiel Elektronenstrahl- oder Laserstrahl-Schweißung, wie beispielsweise bei einer Bimetallerstellung zur Verwendung als Vormaterial für Sägeblätter, hergestellt werden. Diese Schmelzschweißung ist zumeist nur für geringe Querschnitte eindimensional vorteilhaft ausführbar und weist in der oft unebenen Verbindungszone Konzentrationsübergänge der jeweiligen Legierungselemente und gegebenenfalls Versprödungsbereiche auf.

Ein Press-Schweißverfahren, bei welchem eine metallische Bindung von zwei Teilen durch Druck bei erhöhter Temperatur, jedoch ohne schmelzflüssige Phase erreicht wird, wobei zum Beispiel ein niedriglegierter Stahl und ein Werkzeugstahl zu einem Zweilagenblech verbunden werden, ist Stand der Technik und beispielsweise der EP 0566457 B1 entnehmbar.

Sämtlichen Composite-Teilen ist jedoch der Nachteil gemeinsam, dass diese bei einer Wärmebehandlung, zum Beispiel bei einem thermischen Vergüten zur Härtesteigerung des auf Verschleiß beanspruchten Arbeitsteiles, auf Grund von Härtespannungen eine Achskrümmung erfahren. Diese auf makroskopische, mikroskopische und submikroskopische Spannungen, die durch plastische Verformung, durch die bei der Umwandlung eintretenden Volumsänderungen, sogenannte Umwandlungsspannungen und durch die Aufweitung und Verzerrung des Atomgittters, sogenannte Gefügespannungen entstehen, bewirken eine ungleiche Längenänderung der Teile an unterschiedlichen Werkstoffen im Composite-Flachstab bei der Wärmebehandlung und in der Folge ein Biegen desselben. Ein aufwendiges achsfluchtendes Richten der Stäbe nach dem Vergüten ist zwar möglich, auf Grund der verbleibenden inneren Spannungen können jedoch bei einem Nachbearbeiten einer Fläche des Composite-Teiles, zum Beispiel durch einseitiges Schleifen zur Schärfung eines Maschinenmessers wieder Achskrümmungen auftreten.

Hier will die Erfindung eine Abhilfe angeben und setzt sich zum Ziel, einen Composite-Flachstab der eingangs genannten Art zu schaffen, der verbesserte Gebrauchseigenschaften, insbesondere hohe Beständigkeit gegen Gewaltbruch aufweist, in verschiedensten Werkstoffpaarungen erstellt werden kann und bei spanabhebender Bearbeitung keine Achskrümmung zeigt.

Die weitere Aufgabe der Erfindung ist darin zu sehen, ein gattungsgemäßes Verfahren anzugeben, mittels welchem ein Composite-Flachstab mit gegenüber dem Stand der Technik verbessertem Eigenschaftsprofil herstellbar ist.

Das vorgenannte Ziel wird dadurch errreicht, dass der Composite-Flachstab aus warmverformtem Material besteht und im Querschnitt durch einen im Wesentlichen zentrischen Teil aus zähfestem Material, sowie durch einander im Wesentlichen achssymmetrisch gegenüberliegende Außen- oder Arbeitsteile aus hartem, verschleißfestem Werkstoff gebildet ist, welche Teile miteinander durch Press- oder Diffusionsschweißung verbunden sind.

Die mit der Erfindung erreichten Vortelle sind im Wesentlichen darin zu sehen, dass durch den Aufbau bzw. die Anordnung der (des) Außen- oder Arbeitsteile(s) ein innerer Spannungszustand im Flachstab gegeben ist, der auch beim Nachbearbeiten desselben eine Achskrümmung weitgehend ausschließt. Dabei ist es im Hinblick auf gleichmäßige Eigenschaften über die Längserstreckung des Stabes wichtig, dass dieser gegebenenfalls mindestens 2,5-fach warmverformt ist.

Erfindungswesentlich ist ferner die Verbindung der Teile aus unterschiedlichen Werkstoffen mittels der Teile aus unterschiedlichen Werkstoffen mittels Press- oder Diffunsionsschweißung, weil dadurch eine vollkommen ebene Verbindungsfläche ohne gegenseitige Aufmischung oder Abreicherung der Schweißnaht von Legierungselementen, die für eine durchgehend hohe Zähigkeit der Schweißung nachteilig sein kann, gebildet ist. Es ist somit möglich, auch den zentrischen Teil im Hinblick auf dessen chemische Zusammensetzung und in der Folge dessen mechanische Eigenschaften im Wesenlichen ohne Einschränkungen zu wählen.

Wenn der Außen- oder Arbeitsteil im Querschnitt allseitig mit im Wesentlichen achssymmetrisch gleicher Dicke um den zentrischen Teil gebildet ist, können hoher Verschleißwiderstand und besonders gute Formstabilität, sowie hohe Beständigkeit gegen Gewaltbruch des Composite-Stabes erreicht werden.

In einer Weiterbildung der Erfindung, vorzugsweise für eine jeweils gleichgerichtete Biegebeanspruchung, wie dies bei einem Maschinenmeser gegeben ist, kann vorgesehen sein, dass zwei Außen- oder Arbeitsteile an den im Querschnitt schmäleren Seiten des Rechteckes angeordnet sind und im Wesentlichen die gleiche Dicke aufweisen. Bei einer derartigen Ausführungsform kann ein Maschinenmesser mit Vorteil als Wendemesser ausgebildet sein.

Die Gebrauchseigenschaften eines Gegenstandes aus einem Composite-Flachstabes können beanspruchungsgemäß günstig eingestellt werden, wenn der (die) Arbeitsteil(e) und gegebenenfalls der zentrische Teil ein Vergütungs- oder Härtegefüge aufweisen.

Besonders guter Verschleißwiderstand bei hoher Härte und Zähigkeit des Materials ist erreichbar, wenn der (die) Arbeitsteil(e) aus einem pulvermetallurgisch erstellten Werkstoff (PM-Werkstoff) gebildet ist (sind). Bei hohen Kanten und Flächenbelastungen und dergleichen Verschleißbeanspruchungen des Arbeitsteiles einer aus einem Composite-Flachstab gefertigten Maschinenkomponente ermöglicht eine PM-Herstellung einen besonders homogenen und karbidreichen Arbeitsteilwerkstoff mit Vorteil vorzusehen. Dabei ist es erfindungsgemäß günstig, wenn der (die) Arbeitsteil(e) aus Werkzeugstahl mit einem Karbidanteil von größer als 6,2 Vol.-% gebildet ist (sind).

Die weitere Aufgabe der Erfindung, ein Verfahren der eingangs genannten Art anzugeben, wird dadurch gelöst, dass ein Rohling, bestehend aus mindestens zwei unterschiedlich chemisch zusammengesetzten, achssymmetrisch angeordenten Teilen oder Teilbereichen auf Umformtemperatur mit einer querschnittsbezogenen homogen oder zentrisch-symmetrischen Temperaturverteilung gebracht wird, wonach eine Warmumformung des Rohlings mit einem achsbezogen im Wesentlichen gleichen Höhen- oder Querschnittsabnahme erfolgt, zeitlich nachgeordnet eine spanabhebende Bearbeitung zur Flachstaberstellung durchgeführt wird und dieser Stab eine Wärmebehandlung und ein Überschleifen mindestens eines Oberflächenteiles erfährt.

Die mit der Erfindung erreichten Vorteile sind in der synergetischen Abfolge der Bearbeitung bei der Herstellung des Composite-Flachstabes zu sehen. Dabei ist es besonders wichtig, einen geeigeneten Rohling zu schaffen und diesen temperaturentsprechend zu verformen. Dabei müssen die Spalten zwischen den aneinander gelegten Teilen, wie an sich bekannt, abgedichtet werden, um eine Oxidation der Spaltflächen, was Bindungsfehler im Press-Schweißbereich vermeidet, zu verhindern. Diese Abdichtung kann durch eine Schmelzschweißnaht oder durch die aus der Pulvermetallurgie bekannte Kapselmethode erfolgen.

Besonders Augenmerk ist auf die Aufwärmung des Rohlings auf die Umformtemperatur zu legen, denn eine asymmetrische Temperaturverteilung kann bei der Formgebung durch Walzen oder Schmieden zu einer nachteiligen Ausbildung von ungleichen Querschnittsanteilen über die Längserstreckung des Composite-Stabes führen. Bei der Warmumformung selbst ist es wichtig, achsbezogen gleiche Höhen- oder Querschnittsabnahmen vorzusehen, weil anderenfalls eine Durchverformung der Werkstoffteile und die Press-Schweißbindung nicht in allen Querschnittsbereichen ausreichend sicher erfolgen können. Eine spanabhebende Bearbeitung des geformten Composite-Vormaterials und eine auf den (die) Arbeitsteil(e) und auf den zentrischen Teil abgestimmte Vergütung durch Härten und Anlassen erbringen in vorteilhafter Weise im Wesentlichen keine Verbiegung des Stabes, der auch beim Überschleifen formstabil bleibt, sodass dieses günstig mit geringer Schleifabnahme erfolgen kann.

Eine sehr wirtschaftliche Herstellungsart kann erreicht werden, wenn der Rohling als Walzzaggel mit einem zentrischen Teil und mit im Querschnitt an gegenüberliegenden Seiten desselben positionierten Arbeitsbereichen abgedichtet erstellt wird, worauf nach einer Erwärmung eine Walzung und die nachgeordneten Verfahrensschritte erfolgen.

Wenn zumindest der (die) Arbeitsteil(e) pulvermetallurgisch hergestellt werden, kann einerseits eine hohe Verbindungsgüte bei der Press- oder Diffusionsschweißung, andererseits höchste Werkstoffhomogenität und somit verbesserte Gebrauchseigenschaften der aus dem Composite-Flachstab gebildeten Machinenkomponente erzielt werden.

Gemäß einer überragend vorteilhaften Ausgestaltung der Erfindung kann vorgesehen sein, dass in eine Stahlkapsel ein Innenteil aus zähfestem Werkstoff zentrisch positioniert und um diesen ein Werkzeugstahlpulver eingebracht, sowie verdichtet, insbesondere klopfverdichtet, und die Kapsel gasdicht verschlossen werden, worauf ein heißisostatisches Pressen (HIP-en) der Kapsel erfolgt und der derart gefertigte Rohling der Weiterverarbeitung zugeführt wird. Dabei wird bei heißisostatischen Pressen eine Kompaktierung des Metallpulvers mit hohem Legierungsgehalt um den Innenteil und ein Diffusionsschweisen der unterschiedlich zusammengesetzten Teile erreicht, wonach diese Schweißverbindung beim Warmumformen durch Walzen oder Schmieden weiter gestärkt werden kann.

Nachfolgend soll an Hand von lediglich jeweils einen Ausführungsweg darstellenden Zeichungen die Erfindung näher erläutert werden.
Es zeigt:
Fig. 1 einen Composite-Flachstab mit zwei Arbeitsteilen
Fig. 2 einen Composite-Flachstab einem geschlossenen Außenteil

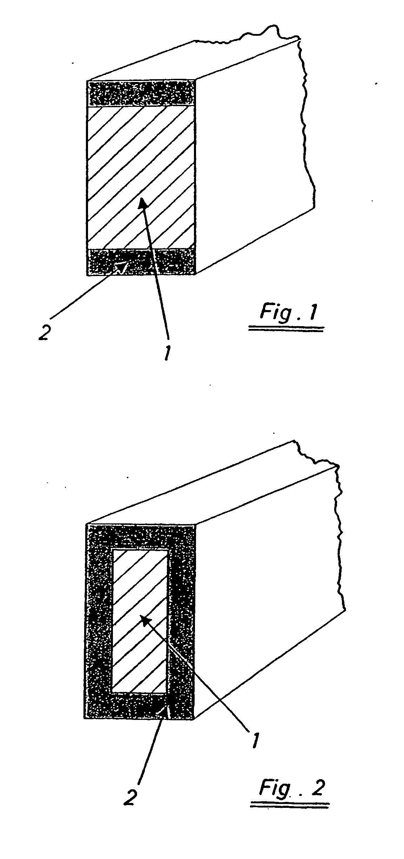

In Fig. 1 ist schematisch ein Composite-Flachstab, wie dieser für Maschinenmesser vorteilhaft einsetzbar ist, dargestellt. Ein hochzäher zentrischer Teil 1 aus einem Vergütungsstahl weist einen Rechteckquerschnitt auf und ist an den Schmalseiten mit je einem Arbeitsteil 2 durch eine Press- oder Diffunsionsschweißung metallisch verbunden. Beide Teile besitzen ein Vergütungsgefüge, wobei die Arbeitsteile 2 einen Karbidgehalt von 6,2 Vol.-% aufwiesen. Eine seitliche Spanabnahme durch ein Schleifen für eine Schärfung des Composite-Stabes bewirkt, wie festgestellt werden konnte, keine Verbiegung desselben.

In Fig. 2 ist ein Composite-Flachstab mit einem geschlossenen Außenteil 2 dargestellt. Ein zentrischer Teil 1 aus einer zähfesten Eisenbasislegierung vermittelt dem Flachstab eine besonders hohe Beständigkeit gegen Gewaltbruch, wobei dieser einen geringer zähen Außenteil 2 stützt. Der Außenteil ist aus einem verscheißbeständigen Werkzeugstahl mit hoher Härte gebildet. Eine vollflächige Press- oder Diffusionsschweißung zwischen den Teilen 1 und 2 sichert bei hoher Güte des Composite-Flachstabes dessen Formstabilität.

## Patentansprüche

1. Composite-Flachstab, gebildet aus miteinander metallisch verbundenen zähfesten und verschleißfesten-harten Teilen für mechanisch hoch- und auf Verschleiß sowie Pressung beanspruchten Maschinen- oder Anlagen-Komponenten, wie Maschinenmesser, insbesondere Maschinen-Wendemesser und dergleichen, **dadurch gekennzeichnet, dass** der Composite-Flachstab aus warmverformtem Material besteht und im Querschnitt durch einen im Wesentlichen zentrischen Teil (1), aus zähfestem Material, sowie durch einander im Wesentlichen achssymmetrisch gegenüberliegende Außen- oder Arbeitsteile (2) aus hartem, verschleißfestem Werkstoff gebildet ist, welche Teile miteinander durch Press- oder Diffusionsschweißung verbunden sind.

2. Composite-Flachstab, nach Anspruch 1, **dadurch gekennzeichnet, dass** ein Außen- oder Arbeitsteil (2) im Querschnitt allseitig mit im Wesentlichen achssymmetrisch gleicher Dicke gebildet ist.

3. Composite-Flachstab nach Anspruch 1, **dadurch gekennzeichnet, dass** zwei Außen- oder Arbeitsteile (2) an den im Querschnitt schmäleren Seiten des Rechteckes angeordnet sind und im Wesentlichen die gleiche Dicke aufweisen.

4. Composite-Flachstab nach einem der Ansprüche 1 bis 3, **dadurch gekennzeichnet, dass** der (die) Arbeitsteil(e) (2) und gegebenenfalls der zentrische Teil (1) ein Vergütungs- oder Härtegefüge aufweisen.

5. Composite-Flachstab nach einem der Ansprüche 1 bis 4, **dadurch gekennzeichnet, dass** der Arbeitsteil (2) aus einem pulvermetallurgisch erstellten (PM)-Werkstoff gebildet ist.

6. Composite-Flachstab nach einem der Ansprüche 1 bis 5, **dadurch gekennzeichnet, dass** der (die) Arbeitsteil(e) (2) aus einem Werkzeugstahl mit einem Karbidanteil, insbesondere von größer als 3,2 Vol.-%, gebildet ist (sind).

7. Verfahren zur Herstellung eines Composite-Flachstabes, gebildet aus miteinander metallisch verbundenen zähfesten und verschleißfest-harten Teilen für mechanisch hoch und auf Verschleiß, sowie Pressung beanspruchten Maschinen- oder Anlagenkomponenten, wie Maschinenmesser, insbesondere Maschinenwendemesser und dergleichen, **dadurch gekennzeichnet, dass** ein Rohling bestehend aus mindestens zwei unterschiedlich chemisch zusammengesetzen, achssymmetrisch angeordneten Teilen oder Teilbereichen auf Umformtemperatur mit einer querschnittsbezogen homogenen oder zentrisch-symmetrischen Temperaturverteilung gebracht wird, wonach eine Warmumformung des Rohlings mit einer achsbezogen im Wesentlichen gleichen Höhen- oder Querschnittsabnahme erfolgt, zeitlich nachgeordnet eine spanabhebende Bearbeitung zur Flachstaberstellung durchgeführt wird und dieser Stab eine Wärmebehandlung und ein Überschleifen mindestens eines Oberflächerteiles erfährt.

8. Verfahren nach Anspruch 7, **dadurch gekennzeichnet, dass** der Rohling als Walzzaggel mit einem zentrischen Teil und mit im Querschnitt an gegenüberliegenden Seiten desselben positionierten Arbeitsbereichen abgedichtet erstellt wird, worauf nach einer Erwärmung eine Walzung und die nachgeordneten Verfahrensschritte erfolgen.

9. Verfahren nach Anspruch 7 oder 8, **dadurch gekennzeichnet, dass** zumindest der (die) Arbeitsteil(e) pulvermetallurgisch hergestellt werden.

10. Verfahren nach Anspruch 7, **dadurch gekennzeichnet, dass** in einer Stahlkapsel ein Innenteil aus zähfestem Werkstoff zentrisch positioniert und um diesen ein Werkzeugstahlpulver eingebracht, sowie verdichtet, insbesondere klopfverdichtet, und die Kapsel gasdicht verschlossen werden, worauf eine heißisostatisches Pressen (HIP-en) der Kapsel erfolgt und der derart gefertigte Rohling der Weiterverarbeitung zugeführt wird.

## Claims

1. Composite flat element formed of tough and wear-resistant, hard metallicly interconnected portions for machine or installation components heavily stressed both to wear and to pressure, such as mechanical knives, particularly mechanical reversible knives or the like, **characterised in that** the composite flat element consists of a hot-workable material, and is formed, in cross-section, of a substantially central portion (1) of tough material as well as of outer or working portions (2), which axial symmetrically oppose substantially each other, of a hard, wear-resistant material, said portions being interconnected by pressure or diffusion welding.

2. Composite flat element according to claim 1, **characterised in that** an outer or working portion (2) is formed at all sides, in cross-section, with substantially an axial symmetrically equal thickness.

3. Composite flat element according to claim 1, **characterised in that** two outer or working portions (2), when seen in cross-section, are situated at the smaller sides of the rectangle and have substantially an equal thickness.

4. Composite flat element according to any of claims 1 to 3, **characterised in that** the working portion(s) (2) and, optionally, the central portion (1) comprise(s) a tempering or hardening structure.

5. Composite flat element according to any of claims 1 to 4, **characterised in that** the working portion (2) is formed of a powder metallurgically produced (PM-) material.

6. Composite flat element according to any of claims 1 to 5, **characterised in that** the working portion(s) (2) is (are) formed of a tool steel having a carbide portion, particularly greater than 3,2 % by volume.

7. Process for producing a composite flat element formed of tough and wear-resistant, hard metallicly interconnected portions for machine or installation components heavily stressed both to wear and to pressure, such as mechanical knives, particularly mechanical reversible knives or the like, **characterised in that** a blanket consisting of at least two axial symmetrically arranged portions or partial zones of different chemical composition are brought to deforming temperature with a homogeneous or centrosymmetrical temperature distribution when seen in cross-section, after which hot-forming of the blanket is effected substantially with an equal reduction in height or cross-section with reference to the axis, and that in time sequence machining processing for producing a flat bar is carried out, and this bar is subjected to a heat treatment and to grinding on at least part of the surface.

8. Process according to claim 7, **characterised in that** the blanket is produced as a billet including a central portion and, when seen in cross-section, working portions positioned in a tightened manner at opposite sides thereof, after which, after heating, rolling and the subsequent steps are effected.

9. Process according to claim 7 or 8, **characterised in that** at least the working portion(s) is (are) are powder metallurgically produced.

10. Process according to claim 7, **characterised in that** in a steel capsule, an inner portion of a tough material is positioned in a centred way, and a powder of a tool steel is introduced around it and is compressed, particularly knock compressed, and the capsule is gas-tightly closed, after which hot-isostatic compressing (to HIP) the capsule is effected and the blanket, thus produced, is delivered to further processing.

## Revendications

1. Elément plat composite formé des parties tenaces, fortes, résistantes à l'usure et dures reliées entre eux de façon métallique pour des composants de machines ou d'installations, qui sont chargées hautement non seulement à l'usure, mais encore à la compression, comme des couteaux mécaniques, particulièrement des couteaux réversibles mécaniques et pareil, **caractérisé en ce que** l'élément plat composite consiste d'un matériau malléable à chaud, et est formé en coupe en travers d'une partie substantiellement centrale (1) d'un matériau tenace et fort ainsi que des parties extérieures ou de travail (2), étant essentiellement axisymétriquement opposées l'une à l'autre, d'un matériau dur et résistant à l'usure, lesdites parties étant reliées l'une à l'autre par soudage à compression ou par diffusion.

2. Elément plat composite selon la revendication 1, **caractérisé en ce qu'**une partie extérieure ou de travail (2) est formée partout avec une épaisseur essentiellement axisymétriquement égale.

3. Elément plat composite selon la revendication 1, **caractérisé en ce que** deux parties extérieures ou de travail (2) sont disposées en coupe aux côtés plus étroits du rectangle et ont substantiellement la même épaisseur.

4. Elément plat composite selon une quelconque des revendications 1 à 3, **caractérisé en ce que** la (les) partie(s) de travail (2), et le cas échéant la partie centrale (1), comprend (comprennent) une structure d'un traitement thermique ou de trempe.

5. Elément plat composite selon une quelconque des revendications 1 à 4, **caractérisé en ce que** la partie de travail (2) est formée d'un matériau (PM) produit par voie de la métallurgie des poudres.

6. Elément plat composite selon une quelconque des revendications 1 à 5, **caractérisé en ce que** la (les) partie(s) de travail (2) est (sont) formée(s) d'un acier à outils ayant une portion de carbure, particulièrement de plus de 3,2 pour-cent en volume.

7. Procédé pour produire un élément plat composite formé des parties tenaces, fortes, résistantes à l'usure et dures reliées entre eux de façon métallique pour des composants de machines ou d'installations, qui sont chargées hautement non seulement à l'usure mais encore à la compression, comme des couteaux mécaniques, particulièrement des couteaux réversibles mécaniques et pareil, **caractérisé en ce qu'**une ébauche consistant d'au moins deux parties ou zones partielles d'une composition chimique différente, qui sont disposées axisymétriquement, est amenée à la température de déformation ayant une distribution de température, par rapport à la coupe, homogène ou centralement symétrique, après quoi on effectue une déformation à chaud de l'ébauche avec une réduction en hauteur ou en coupe substantiellement égale par rapport à l'axe, et on réalise d'une manière temporairement subséquente un usinage par enlèvement des copeaux pour produire l'élément plat, et que cet élément est soumis à un traitement à chaud et à une rectification d'au moins une part de la surface.

8. Procédé selon la revendication 7, **caractérisé en ce que** l'ébauche est produit comme une billette est produite avec une partie centrale et avec des zones de travaille situées, vue en coupe, d'une façon étanche aux côtés opposés de celle-ci, après quoi, après une chauffage, un laminage et les étages de procédé subséquents sont effectués.

9. Procédé selon la revendication 7 ou 8, **caractérisé en ce qu'**au moins la (les) partie(s) de travail est (sont) produite(s) par une procédure à métallurgie des poudres.

10. Procédé selon la revendication 7, **caractérisé en ce que** l'on positionne une partie intérieure d'un matériau tenace et fort de façon centrée dans une capsule d'acier et on introduit un poudre d'acier à outils autour de ceci et le comprime, particulièrement à tassement, et que l'on ferme la capsule d'une manière imperméable aux gaz, après quoi on réalise une compression isostatique à chaud (HIPer) de la capsule, et que l'ébauche ainsi produite est amenée à un traitement ultérieur.
